# EUROPEAN PATENT APPLICATION

(11) **EP 2 006 821 A1**
(43) Date of publication of application: **24.12.2008**
(21) Application number: 07380177.1
(22) Date of filing: 19.06.2007
(51) Int. Cl.: G09B 5/12

(54) **Interactive system for computer classrooms**

(71) Applicant: Roycan Audiosistemas S.A., 46980 Paterna (Valencia) (ES)
(72) Inventor: Rogero Martinez, Francisco José, 46980 Paterna (Valencia) (ES)
(74) Representative: Canadell-Isern, Roberto

(57) **Abstract**

The interactive system for computer classrooms, which consists of a device (1) located in each computer and presents a feed hole (2) for headphone connection, its buttons (3), (4) to directly control the computer's volume from the device itself (1), and USB connections (5), one of them for communication with the computer, and the other to connect any other type of external device, so that it provides the computer with the necessary hardware in such a way that the audio communication can be carried out with the best quality and improving the available resources to the utmost.

## Description

The object in reference to the invention that is protected under this Patent consists of an "Interactive system for computer classrooms", so that, through the installation of this system, audio and visual resources can be sent in real time through a single computer network without the need of additional wires or electronics.

### BACKGROUND

Presently, there are known technologies that need networks in addition to the computer network in order to achieve the real-time audio and visual transfer with an optimum quality, with these technologies requiring independent wiring for voice emissions as well as image projection.

Computer classrooms, multimedia labs, pedagogical computerised areas for training or educational centres, etc., where simultaneous activities are carried out in class or there is need for teacher-student communication, must be equipped with computers and the equipment necessary for its correct operation. The main inconvenience resides in the difficulty of carrying out the equipping of these classrooms, since distinct, independent wiring is needed for audio, for video and another for the computers. Also, the cost and time of equipping are high as are its installation and resolution of incidences.

Because of this, there is need of a system capable of establishing the transmissions for audio as well as video signals by means of a single computer network allowing high levels of communication and at the same time facilitating the installation of said system without having to make a large investment. Also, this new system allows for the communication between the classroom teacher and students, sending them audiovisual resources to their workstations, controlling and supervising their work from his workstation and administering the classroom in an agile and intuitive manner from his computer.

### DESCRIPTION OF THE INVENTION

The purpose of the invention that constitutes the object of this Patent consists of providing technology that is easier and more intuitive to use which does not require further wiring to the additional computer network whether it is UTP (wiring), WIFI (wireless) or PLC (electrical), having been designed and developed paying attention to this primary objective. The interactive system for computer classrooms consists of a set of network protocols that allow, through a TCP/IP computer network, a main computer (teacher) to send audio signals, communicate, send image sources and control the rest of the computers (students).

The characteristics of the protocol are:
- Sending of multiplexing contents, that is, various communication channels or ports are used to send multiple contents according to the different functions that the teacher wants to use.
- Three different types of protocols. One of audio/video with the possibility of transmitting various channels in real time. Another one of audio in real time of low latency capable of creating different independent groups and pairs. And another one of data to communicate the teacher's software with the students, transmit text and control and view the students' computers.
- The system is open so that under these conditions content streaming can be done to any computer that meets the specification of the object of the patent.

The requirements for the proper functioning of the system are: a computer at the teacher's workstation, computers at the students' workstations, the classroom must have an operative computer network that allows communication among all the equipment, devices that provide the computer with the necessary hardware at the teacher's workstation as well as that of the students, and headphones.
The interactive system presents a series of functional characteristics:
- Image and sound broadcasting: the teacher can transmit audio and video in real time from different analogical and digital mediums (DVD, VCD, CD, stored and zipped files on the hard drive, etc.) to all the students' computers.
- Simultaneous work channels and groups: the teacher can create different simultaneous work groups in class, so that they are all intercommunicated, and in turn, the teacher can send different sources. The system also allows the transmission of various simultaneous image and sound channels (DVD, digitalized audio and video files, Internet, etc.) so that any of the groups can listen or visualize different materials, all of them being controlled by the teacher. The channels are independent amongst themselves; they can come from different sources, analogical as well as digital.
- Demonstration: the teacher can show his screen to the rest of the class in order to carry out demonstrations and theoretical classes, clarify doubts or concepts, etc. Simultaneous to the image, the teacher can transmit voice through the network in order to improve the explanation.
- Teacher's oral communication: the teacher can address all the students through the headphones, which increases the attention level of the students and improves the perception of the transmitted information. Also, this communication can be directed to all the class or to a selected group of students, which allows the teacher to attend to the individual needs of each student without hindering the work of the rest.
- Transmission of a student's voice: the teacher can select a student and let the remainder of the students hear him.
- Conversations between two: the system allows for the possibility of grouping the students into teams of two so that they can communicate with each other through the headphones. This function is especially useful in language practice since they can simulate conversations.
- Virtual configuration of the classroom: the teacher can create on his screen a virtual view of the layout of the students, identifying each of them by name or by the workstation they occupy. Because of this, the student must insert his name and password at the start of a new session. The classroom configurations can be saved by the teacher depending on the needs of each class.
- Monitoring of a student: the teacher can select which student he wants to listen to without letting the student realize it. Also, the teacher can see on his screen the image on the student's computer when it is being monitored so he has a complete perception of the work that the student is doing.
- Remote control: the teacher can share the keyboard and mouse of the students' computers.
- Attention: the teacher can block the screen, keyboard and mouse of the students' computers when he thinks it is necessary, so that the students will centre their attention in the shown activity.

### BRIEF DESCRIPTION OF THE DRAWINGS

In order to complement the description of the invention and facilitate the interpretation of the structural and functional characteristics of its object, drawings are included in which the preferential performance of the interactive system for computer classrooms that constitutes the object of this Patent are schematically represented. In said drawing:

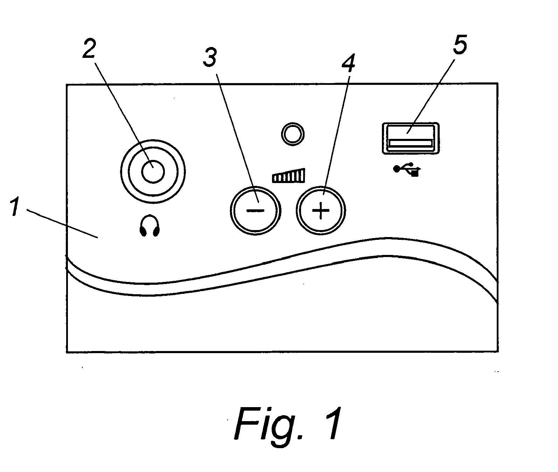

- Figure 1 represents a front view of the device that provides the necessary hardware for the computers.
- Figure 2 shows a general diagram of the interactive system for the computer classrooms.

### DESCRIPTION OF PREFERENTIAL PERFORMANCE

To show clearly the nature and scope of the advantageous application of the interactive system for computer classrooms, which constitutes the object of the claimed invention, the structure is described below, referring to the drawing that, because it represents the preferential performance of said object, of an informative nature, it must be considered in its broadest sense and not as a limiter of the application and of the content of the claimed invention.

Because of this, the interactive system basically consists of a device (1) that provides the computer with the necessary hardware so that the audio communication can be carried out with the best quality and improving to the utmost the available resources. This device has a feed hole (2) for the headphone connection, its buttons (3) (4), to directly control the computer's volume from the device itself (1), and USB connections (5) one of them for the communication with the computer and the other to connect any type of external device such as MP3 players, pen drives, etc.

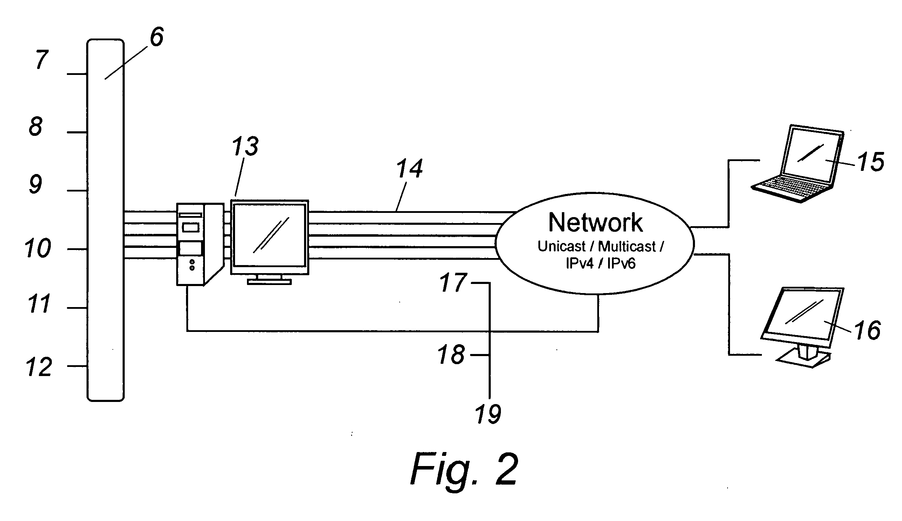

The diagram in Figure 2 represents a device (6) with multiple entries (7) to (12) corresponding, respectively, to audiovisual signals coming from the receiving instruments of radio and television, video recorders-players, CDs and other image, sound and data mediums, as well as other information sources.

These entries are applicable to the main computer equipment (13), related by means of a multiple connection (14) with a network that has outlets (15) and (16) for as many other computers, for example, as those used by the students of a computer classroom.

An audio/video transmission line (17) in real-time and a line (18) for communication groups in real-time feed a broadcasting line (19).

In order to be able to generate all the contents and interactions it is necessary to have hardware as well as software contents. Regarding the hardware specifications, we have:
For the teacher:
   - A/D (analogical/digital) signal converter: which allows the real-time processing of audio as well as video signals for later sending them through the network.
   - D/A (digital/analogical) signal converter: which allows the processing in real time of the packages that arrive from the network to the computer to be transmitted analogically.
   - Exterior PA system: it allows audio transmission without the need of this audio to be transmitted individually in every computer.
   - Network adapters: the system transmits and receives information to and from the network through a technique used in general networks or transmissions where contents are put into the network without specifying their destination. The system generates information that each computer processes depending on what the teacher deems appropriate.
   - Screen: tactile screen where one can administer the whole classroom carrying out all the software functions. Also, the system allows the use of the computer system's usual hardware.
   - User interface: buttons have been provided in order to regulate the volume of the headphones and of the exterior speakers.
For the students:
   - A/D (analogical/digital) signal converter: which allows the real-time processing of the microphone's analogical audio signal for its later sending through the network.
   - D/A (digital/analogical) signal converter: which allows the processing in real time of the packages that arrive from the network to the computer to be analogically transmitted through the student's headphones as well as on the computer screen.
   - User interface: buttons have been provided in order to permit the students to regulate the headphone volume. Also, the system has the possibility of connecting two audio devices to one computer, which allows two students to share said computer and each regulate the volume independently.

The software that is required by the system allows one to control all the classroom resources from the teacher's monitor through an intuitive interface. Also, this interface can be updated with the loading of additional software or downloading it from Internet.

## Claims

1. "Interactive system for computer classrooms", **characterized because** it consists of a device (1) located in each computer that presents a feed hole (2) for headphone connection, its buttons (3) (4) to directly control the computer's volume from the device itself (1), and USB connections (5), one of them for the communication with the computer and the other to connect with any type of external device, so that it provides the computer the necessary hardware for the audio communication to be carried out with the best quality and improving the available resources to the utmost.

2. "Interactive system for computer classrooms", according to claim 1, **characterized because** a device has been provided (6) with multiple entries (7) to (12) corresponding, respectively, to audiovisual signals from radio and television receiving devices, video recorder-player, CDs and other image, sound, and data mediums, as well as other information sources.

3. "Interactive system for computer classrooms", according to claims 1 and 2, **characterized because** said entries are suitable to be applied to a main computer (13), related through a multiple connection (14) with a network provided with outlets (15) and (16) for as many other computers, for example, as are used by the students in a computer classroom.

4. "Interactive system for computer classrooms", according to claims 1 to 3, **characterized because** a real time audio/video transmission line (17) and a line (18) for real-time group communication in order to feed a broadcasting line (19) have been provided.

5. "Interactive system for computer classrooms", according to claim 1, **characterized because** in order to generate all the system contents and interactions, said device (1) incorporates in the main computer (teacher) an A/D signal converter that allows the real-time processing of audio as well as video for its later sending through the network; a D/A signal converter that allows the real-time processing of the packages that arrive from the network to the computer to be analogically transmitted; exterior PA system to transmit audio without the need of it being transmitted individually in each computer; network adapters where the system transmits and receives information to and from the network through the technique used in general networks and transmissions where contents are put into the system without specifying their destination and that generate information that each computer processes according to what the teacher deems appropriate; tactile screen where one can administer the whole classroom carrying out all the software functions, also allowing the use of the computer system's usual hardware and a user interface for which buttons have been provided to regulate the headphone and exterior loudspeaker volume.

6. "Interactive system for computer classrooms", according to claim 5, **characterized because** said device (1) incorporates to the remainder of the computers (students) an A/D signal converter that allows the real-time processing of the microphone's analogical audio signal for its later sending through the network; D/A signal converter that allows the real-time processing of the packages that arrive from the network to the computer to be analogically transmitted for the student's headphones as well as the computer screen and a user interface for which buttons have been provided that allow the students to regulate the headphone volume.
